# FASCICULE DE BREVET EUROPEEN

(11) **EP 2 160 586 B1**
(45) Date de publication et mention de la délivrance du brevet: **16.05.2018**
(21) Numéro de dépôt: 08774129.4
(22) Date de dépôt: 18.06.2008
(51) Int. Cl.: G01N 3/08

(54) **DISPOSITIF D'ESSAI DE PANNEAUX STRUCTURAUX**
VORRICHTUNG ZUM TESTEN VON STRUKTURPLATTEN
DEVICE FOR TESTING STRUCTURAL PANELS

(30) Priorité: 25.06.2007 FR 0756002
(43) Date de publication de la demande: 10.03.2010
(73) Titulaire: ArianeGroup SAS, 75015 Paris (FR)
(72) Inventeur: DECRAECKER, Patrick, F-33460 Arsac (FR); ROUSSY, Antoine, F-33800 Bordeaux (FR); DUBREUIL, Romain, F-33000 Bordeaux (FR); MIGNON, Olivier, F-33140 Villenave D'ornon (FR)
(74) Mandataire: Ipside
(86) Numéro de dépôt international: PCT/EP2008/057690
(87) Numéro de publication internationale: WO 2009/000721

(56) Documents cités:
- US-A1- 2006 101 921
- US-A1- 2006 101 921
- AMBUR DAMODAR R ET AL: "Design and evaluation of composite fuselage panels subjected to combined loading conditions" JOURNAL OF AIRCRAFT, AIAA, RESTON, VA, US, vol. 42, no. 4, 2005, pages 1037-1045, XP008082679 ISSN: 0021-8669
- BAKUCKAS J G ET AL: "Full-scale testing of fuselage panels" 2001 IEEE AUTOTESTCON PROCEEDINGS. IEEE SYSTEMS READINESS TECHNOLOGY CONFERENCE. AUTOTESTCON 2001. VALLEY FORGE, PA, AUG. 20 - 23, 2001, IEEE AUTOTESTCON PROCEEDINGS: IEEE SYSTEMS READINESS TECHNOLOGY CONFERENCE, NEW YORK, NY : IEEE, US, vol. CONF. 37, 20 août 2001 (2001-08-20), pages 827-846, XP010556153 ISBN: 0-7803-7094-5
- AMBUR DAMODAR R ET AL: "Design and evaluation of composite fuselage panels subjected to combined loading conditions", JOURNAL OF AIRCRAFT,, vol. 42, no. 4, 1 January 2005 (2005-01-01), pages 1037-1045, XP008082679, ISSN: 0021-8669
- BAKUCKAS J G ET AL: "Full-scale testing of fuselage panels", 2001 IEEE AUTOTESTCON PROCEEDINGS. IEEE SYSTEMS READINESS TECHNOLOGY CONFERENCE. AUTOTESTCON 2001. VALLEY FORGE, PA, AUG. 20 - 23, 2001; [IEEE AUTOTESTCON PROCEEDINGS: IEEE SYSTEMS READINESS TECHNOLOGY CONFERENCE], NEW YORK, NY : IEEE, US, vol. CONF. 37, 20 August 2001 (2001-08-20) , pages 827-846, XP010556153, DOI: 10.1109/AUTEST.2001.949465 ISBN: 978-0-7803-7094-4

## Description

La présente invention concerne un dispositif d'essai de panneaux structuraux.

Le domaine technique concerné par la présente invention est en particulier celui des moyens d'essai mécanique de pièces à l'échelle 1. Il s'agit d'essais où l'on soumet des pièces grandeur nature aux sollicitations mécaniques pour lesquelles elles ont été dimensionnées, soit de façon à vérifier qu'elles sont bien capables de supporter ces sollicitations que ce soit à l'état initial, après vieillissement ou après détérioration, soit à les homologuer par rapport à des normes ou des réglementation soit à déterminer leur tenue en fatigue. De tels essais sont pratiqués notamment pour la certification des aéronefs.

L'invention porte plus particulièrement sur un moyen d'essai destiné à solliciter des panneaux courbes, ou plus généralement des secteurs de structures de révolution, tels des éléments de fuselage ou des panneaux d'ailes.

Les essais à réaliser sont des essais très complexes, car ils doivent simuler l'ensemble des sollicitations que subit une pièce réelle. Cela signifie qu'il faut réaliser en particulier pour un panneau des sollicitations transverses et axiales en traction et/ou compression, des sollicitations radiales (pression interne de l'avion), de la torsion et/ou du cisaillement, le tout combiné tout en respectant la géométrie de la structure dont le panneau est un élément.

Eventuellement ces essais sont à faire en situation de température et d'hygrométrie variables et maîtrisée, représentative par exemple du vol d'un avion températures de -70°C à +100°C, hygrométrie variant de 0 à 100%, ou dans des situation cryogéniques ou très chaudes dans le cas d'un lanceur spatial.

Le document US 2006/0101921 au nom de BOEING résume les problèmes à traiter pour de telles simulations, simulation radiale, simulation du cisaillement en combinaison avec les chargements axiaux et transverses, sollicitation radiale et la nécessité de réaliser des calculs numériques et un pilotage complexe pour simuler le comportement des panneaux à leurs interfaces.

Ce document propose de réaliser toutes les sollicitations simultanément en conditions d'ambiances variables et contrôlées et décrit pour ce faire divers dispositifs complexes comprenant un système de traction/compression pour la sollicitation axiale, un système de déplacement hydraulique de ce système de traction pour appliquer le cisaillement, des membranes pour permettre la mise en pression, un dispositif comportant une pluralité de compas actionnés par vérins pilotés par un calculateur pour réaliser des sollicitations transverses.

Ce document décrit un dispositif très complexe mécaniquement, qui nécessite nécessairement des calculs sophistiqués pour définir les divers efforts selon les diverses sollicitations, en particulier pour connaître la part de la sollicitation transverse.

Les documents FR 2 889 310 et FR 2 889 311 prévoient des essais de tronçons de fuselage entier pour éviter les problèmes dus aux essais sur panneaux. Ceci permet d'utiliser des moyens qui sont plus faciles à concevoir et mettre en oeuvre car, dans les essais sur panneaux, ce qui fait la difficulté ce sont les conditions limites, et il y a moins de conditions limites dans un tronçon de fuselage que dans un panneau de fuselage. En particulier, il n'y a plus de problème de chargement transverse, et le chargement radial peut simplement se simuler par une mise en pression interne du fuselage.

Ces solutions qui s'appliquent à des structures entières nécessitent toutefois des moyens d'essai gigantesques et complexes totalement disproportionnés par rapport aux essais à réaliser.

L'objectif de la présente invention est de définir un moyen d'essais de panneaux échelle 1 permettant de mettre en oeuvre toutes les sollicitations nécessaires de façon plus simple que les moyens connus existant.

Dans ce but, le principe de l'invention est de remplacer la sollicitation transverse mécanique par une contrainte géométrique représentative du complément du panneau à la structure dont il est issu.

Pour ce faire, la présente invention propose un dispositif d'essai de panneaux structuraux caractérisé en ce qu'il comprend des moyens passifs sous forme d'un bâti et de moyens d'interface entre le bâti et le panneau pour appliquer géométriquement des contraintes représentatives des contraintes dues aux pièces qui entourent le panneau en utilisation normale. Les moyens passifs comprennent un bâti porteur comportant un socle pourvu d'une poutre fixe recevant une première pluralité de premiers moyens d'interface repris sur un premier bord longitudinal du panneau, au moins deux montants parallèles recevant une seconde pluralité de seconds moyens d'interface repris sur les bords latéraux du panneau, et le dispositif comprend une poutre mobile, recevant une troisième pluralité de troisièmes moyens d'interface repris sur un second bord longitudinal du panneau, la poutre mobile étant solidaire de moyens de traction et d'application de contraintes au panneau, le dispositif d'essai étant configuré pour appliquer des contraintes géométriques sur les bords latéraux du panneau selon le rayon de courbure du panneau en réponse à un effort de traction sur le second bord longitudinal du panneau appliqué avec les moyens de traction et d'application de contraintes au panneau et pour lequel au moins certains des premiers, seconds et troisièmes moyens d'interface comprennent des chapes montées à coulisse sur des barres reprises sur le bâti et/ou sur la poutre mobile. Ainsi, selon la présente invention on remplace une pluralité de moyens actifs imposant des sollicitations mécaniques aux bords du panneau tels que décrits dans le document US 2006/0101921 par une géométrie du dispositif d'essai de sorte qu'il se comporte comme l'environnement réel du panneau en essai en lui appliquant des contraintes géométriques.

Dans ce cadre, avantageusement, au moins certains des moyens d'interface sont configurés pour réaliser des liaisons entre le bâti et le panneau offrant un degré de liberté à ces liaisons entre le bâti et le panneau dans des directions transverses aux bords du panneau.

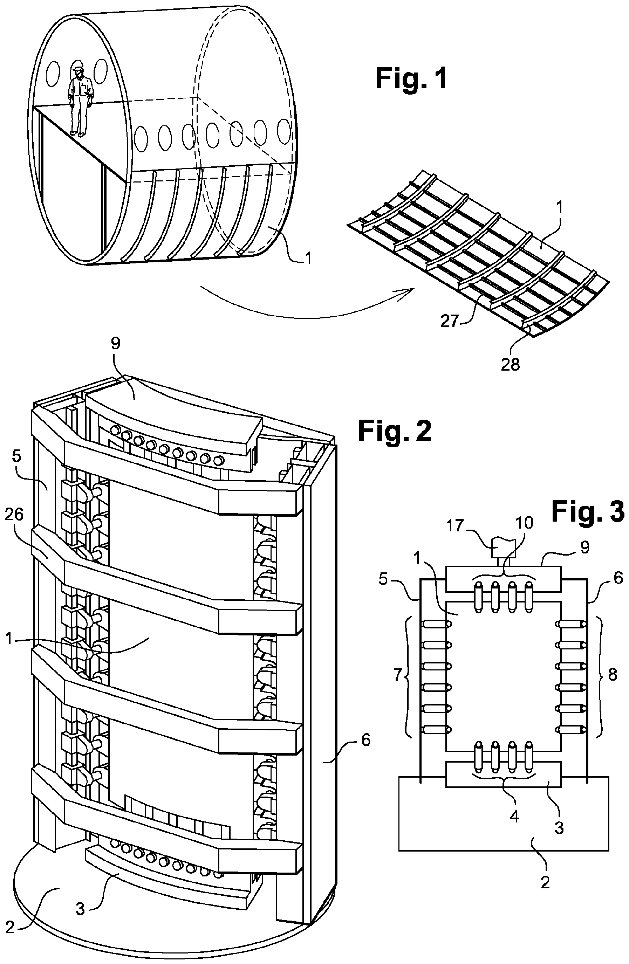

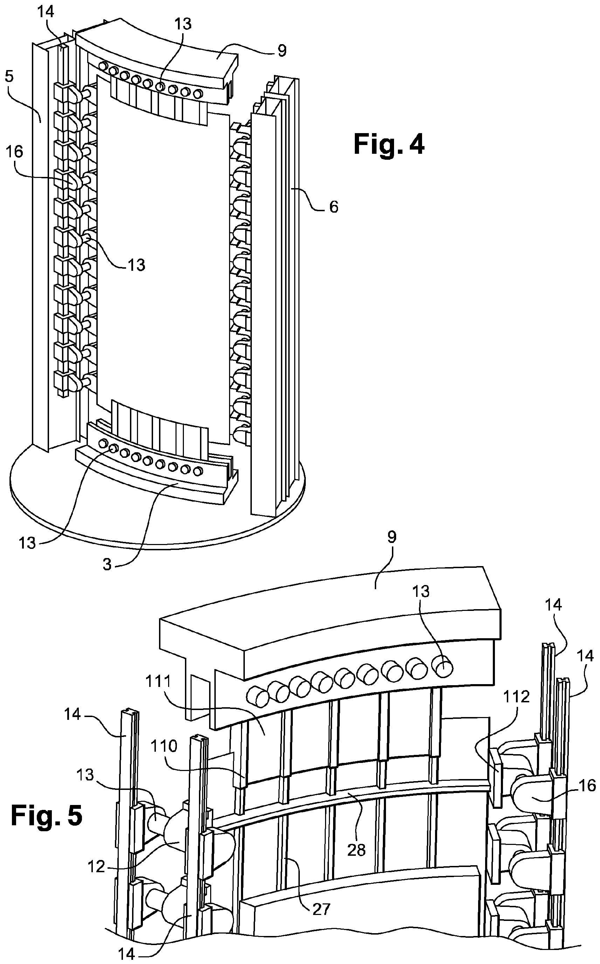

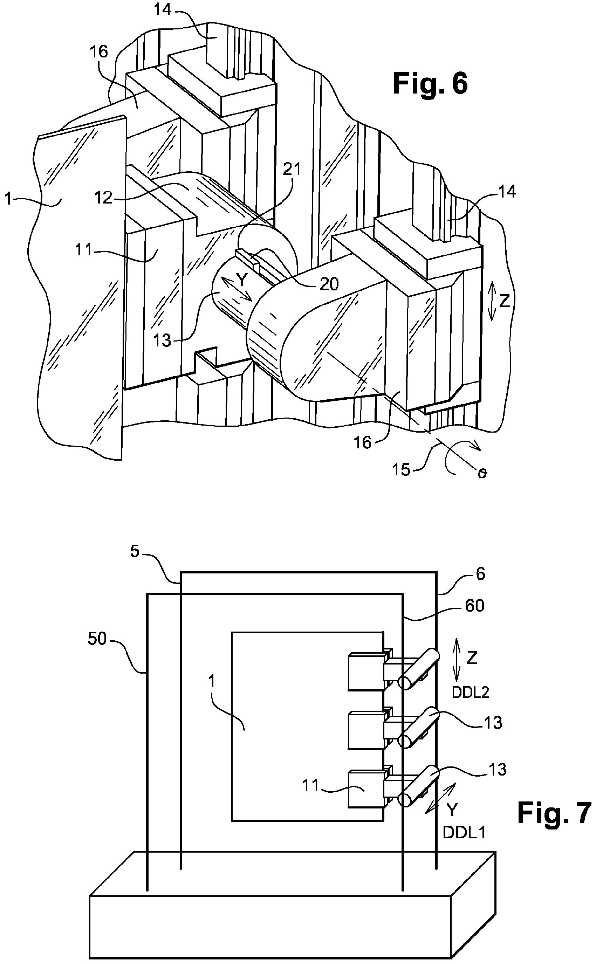

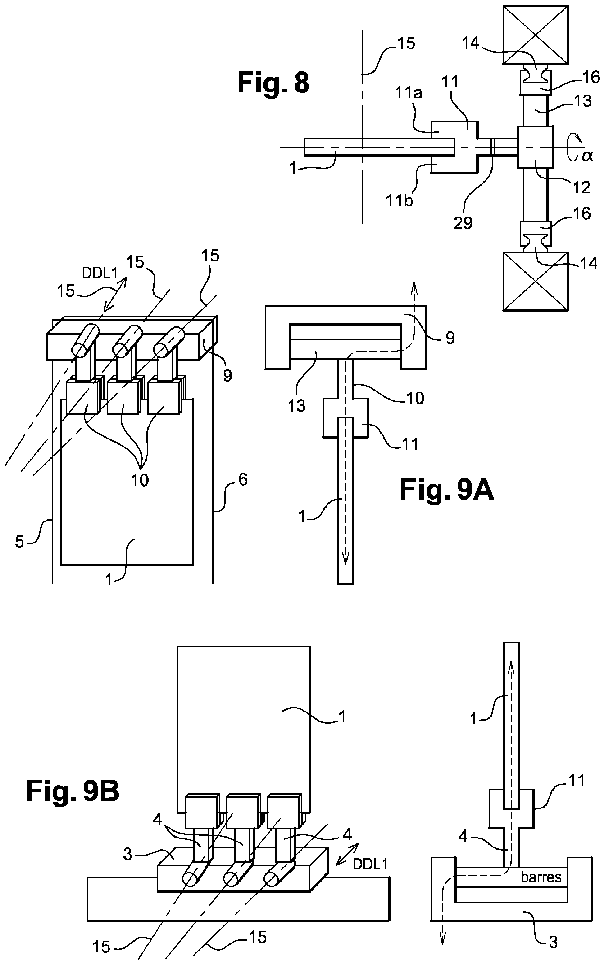

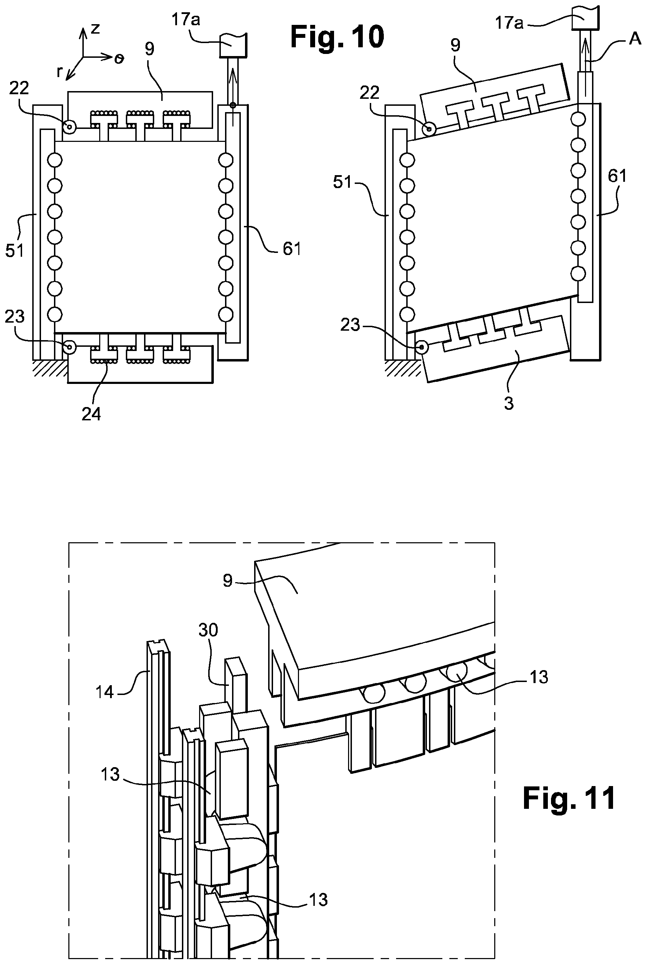

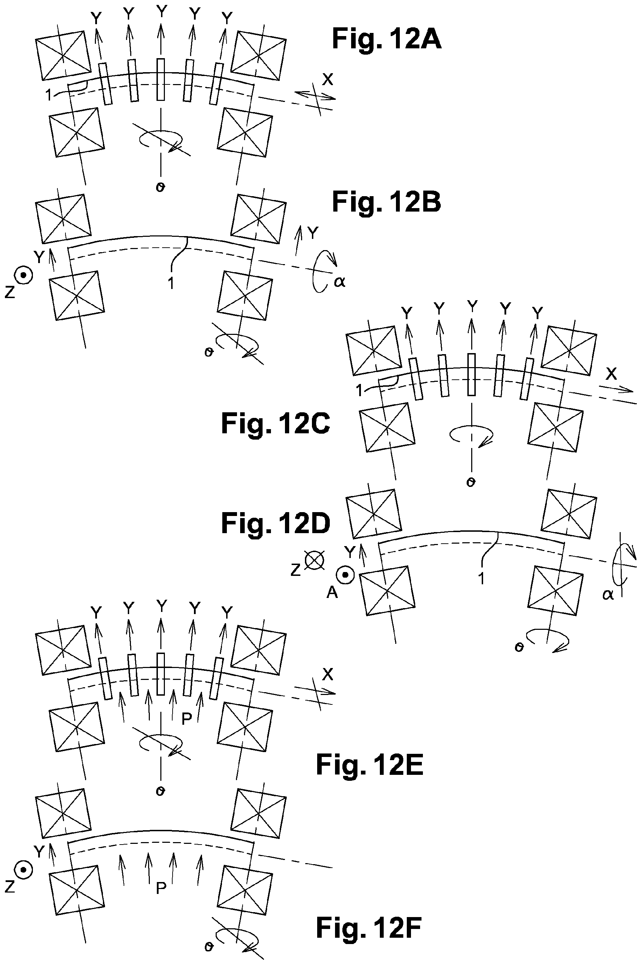

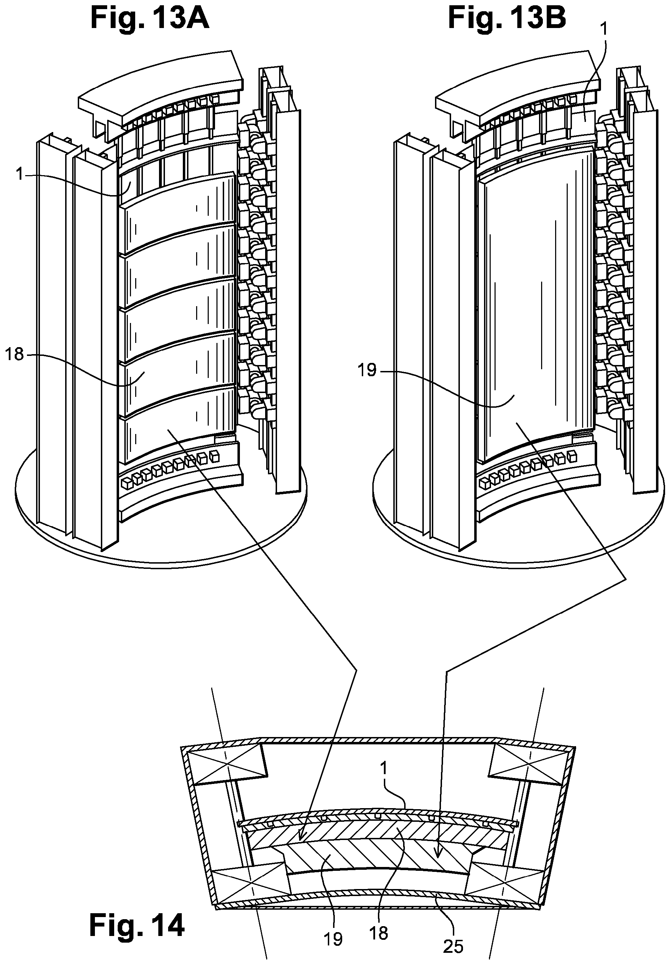

D'autres caractéristiques et avantages de l'invention seront apparents à la lecture de la description qui suit d'un exemple de réalisation non limitatif de l'invention en référence aux dessins qui représentent:
en figure 1: un exemple de panneau structurel contrôlé avec le dispositif de l'invention;
en figure 2: une vue en perspective d'un exemple de réalisation d'un dispositif selon l'invention;
en figure 3: une représentation schématique de face du dispositif de l'invention équipé d'un panneau à contrôler;
en figure 4: une vue en perspective du dispositif de la figure 2 partiellement démonté;
en figure 5: un détail du dispositif de la figure 4 avec les montants du dispositif retirés;
en figure 6: un exemple de réalisation de moyens d'interface conformes à l'invention;
en figure 7: une vue schématique d'une liaison entre le panneau et un montant du dispositif;
en figure 8: une vue schématique du dessus d'une liaison selon la figure 7;
aux figures 9A et 9B: des vues schématiques de liaisons entre le panneau et la poutre mobile de l'invention;
en figure 10: une vue schématique de face d'un mode de réalisation particulier de l'invention adapté à l'application d'efforts de cisaillement sur le panneau;
en figure 11: une vue en perspective d'un détail de réalisation du dispositif de l'invention adapté à des essais de cisaillement;
aux figures 12A à 12F: des représentations schématiques des efforts et contraintes appliquées au panneau respectivement au niveau de la poutre mobile, des montants sous l'application d'une traction ou compression, d'un cisaillement et sous application d'une pression d'un côté du panneau;
aux figures 13A, 13B: deux vues en perspective d'un exemple de réalisation de moyens d'application de pression sur une face du panneau selon un mode de réalisation particulier de l'invention;
en figure 14: une vue schématique du dessus des moyens d'application de pression de la figure 13B.

Le dispositif de l'invention est particulièrement adapté à la réalisation d'essais mécanique de pièces telles que des panneaux 1 de structure d'aéronef comme représentés à la figure 1. Le dispositif est adapté à soumettre de tels panneaux grandeur nature aux sollicitations mécaniques pour lesquelles ils ont été dimensionnés.

Les panneaux comportent des lisses 27 et des cadres 28.

Dans le cas de panneaux de fuselage d'aéronef, les essais donnés ci-dessous à titre d'exemple sont notamment nécessaires:

| | |
|---|---|
| **ESSAIS STATIQUES** | Pression : Δ_{P} 2000 mb |
| | Effort de traction : 4000 KN |
| | Effort de compression : flux max de 3000N/mm |
| | Flux de cisaillement : 2300 N/mm |
| **ESSAIS DE FATIGUE** | Pression : Δ_{P} 1500 mb |
| | Effort de traction : 3000 KN |
| | Effort de compression : flux max de 3000N/mm |
| | Flux de cisaillement : 1700 N/mm |

Ces essais sont réalisés entre -70°C et +100°C, les essais de fatigue sont envisagés à une fréquence de 0,2 HZ et niveau de déformation du spécimen sous les sollicitations de traction/compression est estimé à environ ± 10 mm.

Le dispositif d'essai de panneaux structuraux 1, dont une représentation est donnée à la figure 2, comporte un bâti porteur comportant un socle 2 pourvu d'une poutre fixe 3, au moins deux montants parallèles 5, 6 et une poutre mobile 9.

Comme représenté à la figure 3, la poutre fixe 3 reçoit une première pluralité de premiers moyens d'interface 4 repris sur un premier bord longitudinal du panneau, les montants parallèles 5, 6 reçoivent une seconde pluralité de seconds moyens d'interface 7, 8 repris sur les bords latéraux du panneau, la poutre mobile 9 reçoit une troisième pluralité de troisièmes moyens d'interface 10 repris sur un second bord longitudinal du panneau et la poutre mobile 9 est solidaire de moyens 17 de traction et d'application de contraintes au panneau.

Selon l'invention, le dispositif d'essai est configuré géométriquement pour appliquer des contraintes sur les bords latéraux du panneau selon le rayon de courbure du panneau en réponse à un effort de traction ou de compression sur le second bord longitudinal du panneau appliqué avec les moyens 17 de traction et d'application de contraintes au panneau.

Le dispositif doit permettre de transmettre des efforts axisymétriques tout en simulant les conditions limites d'axisymétrie propres à un panneau de tronçon central d'aéronef.

Le dispositif représenté à la figure 3 permet d'appliquer au panneau des efforts axiaux en compression ou traction via les interfaces longitudinales du panneau reliées aux lisses et à la peau du panneau tout en imposant un déplacement du panneau suivant son rayon de courbure via les interfaces latérales comme il sera vu ci-après.

La figure 7 représente schématiquement deux déplacements prévus des seconds moyens d'interface par rapport aux montants du dispositif.

Selon cet exemple, les moyens d'interface peuvent se déplacer selon deux directions, une direction radiale représentée par le degré de liberté DDL1 sur l'axe Y et parallèlement au panneau selon le degré de liberté DDL2 selon l'axe Z.

Dans ce cas, les secondes interfaces sont positionnées sur des rails parallèles aux montants permettant le déplacement libre axial de la structure testée.

Ces contraintes et déplacements sont notamment réalisés à l'aide d'une configuration particulière des moyens d'interface et de leur liaison au bâti du dispositif.

Ces premiers, seconds et troisièmes moyens d'interface 4, 7, 8, 10 dont un exemple est représenté à la figure 6 comprennent une pluralité de ferrures 11 assujetties sur le bord du panneau et régulièrement espacées.

Les ferrures comprennent par exemple des mors 11a, 11b schématisés à la figure 8 et collés ou rivetés sur les bords du panneau 1.

Sur le détail de la figure 5 on constate que les ferrures sont reprises sur les lisses 27, ferrures 110, sur la peau du panneau, ferrures 111 et sur les cadres 28, ferrures 112.

Ainsi, l'ensemble des fixations du panneau sur des panneaux complémentaires l'entourant sont reproduites.

De retour à la figure 6, au moins certains des premiers, seconds et troisièmes moyens d'interface comprennent des chapes 12 montées à coulisse sur des barres 13 reprises sur le bâti.

Au moins certaines des chapes 12, notamment préférentiellement dans un cas de traction équilibrée, les chapes raccordant les premiers moyens d'interface 4 repris sur un premier bord longitudinal du panneau à la poutre fixe 3 et les chapes raccordant les troisièmes moyens d'interface 10 repris sur un second bord longitudinal du panneau à la poutre mobile 9, ainsi que les barres 13 associées comportent des moyens d'indexage 20, 21 s'opposant à une rotation des chapes 12 sur les barres 13.

Les moyens d'indexage sont avantageusement amovibles, notamment préférentiellement pour les chapes raccordant les seconds moyens d'interface 7, 8 aux montants, ce qui, en l'absence de moyens d'indexage, libère un degré de liberté en rotation des chapes 12 par rapport aux barres 13 en particulier dans le cas d'un essai en cisaillement.

Les moyens d'indexage prévus selon l'exemple comprennent des clavettes 20 reçues dans des gorges 21 réalisées tant dans les barres 13 que dans les chapes 12.

Les premiers et troisièmes moyens interfaces longitudinaux haut et bas sont schématisés aux figures 9A et 9B.

Ils ont pour objet de permettre de transférer les efforts tout en assurant un guidage radial de la structure. Ils assurent le degré de liberté DDL1 radial des moyens interface, le transfert des efforts de traction du panneau sur le socle et maintiennent le panneau.

Les poutres 3 et 9 sont des poutres en U dans lesquelles sont insérées les barres 13 portant les moyens interface.

Les moyens interfaces longitudinaux sont constituées par les ferrures 11 connectées au panneau et à un ensemble mobile au rayon de courbure constitué par les barres 13 reliées aux poutres 3, 9.

Selon les figures 4 et 5, la poutre mobile 9 est cintrée au rayon de courbure du panneau. Il en est de même pour la poutre 3 reliée au socle 2.

Selon un mode de réalisation préférentiel, les barres 13 sont orientées parallèlement à des axes, repris sous le repère général, 15 transverses au panneau et dans le cas d'un panneau présentant une courbure autour d'un axe longitudinal (axe parallèle au plan reliant la poutre fixe et la poutre mobile) les axes 15 perpendiculaires au panneau sont des axes radiaux par rapport au panneau en sorte d'éviter de gauchir le panneau lors de l'application d'efforts longitudinaux. Les axes 15 ne sont pas parallèles entre eux lorsque le panneau n'est pas plan, en particulier dans le cas d'un panneau courbe de tronçon de fuselage. De même les directions Y selon les axes 15 ne sont pas parallèles mais distribuées selon le rayon de courbure du panneau.

Dans une configuration particulière du dispositif de l'invention représentée à la figure 4 et selon le détail de la figure 5, les montants parallèles 5, 6, 50, 60 sont divisés et comprennent des glissières porteuses 14, les barres latérales étant solidaires de coulisseaux 16 montés sur les glissières porteuses 14.

Ces montants divisés sont avantageusement placés l'un par rapport à l'autre pour que les barres latérales soient perpendiculaires à la tangente au panneau au bord du panneau.

Dans cette configuration schématisée en vue de dessus à la figure 8, chaque barre latérale comporte des coulisseaux 16 à ses deux extrémités et les montants sont pourvus de deux glissières de sorte que les barres 13 puissent se déplacer parallèlement à elles mêmes.

Il est à noter que pour plus de représentativité du modèle théorique idéal, il est nécessaire de libérer la rotation dans l'axe de la barre de guidage, pour ce faire, la jonction entre les ferrures 11 et les chapes 12 comporte préférablement une articulation 29 permettant une rotation α de la chape par rapport à la ferrure selon un axe passant par la chape et la ferrure et perpendiculaire à l'axe de la barre 13.

Cette configuration pour laquelle les barres reliées aux montants peuvent se déplacer parallèlement à elles mêmes est particulièrement adaptée aux essais en traction et compression, les articulations 29 permettant de constater les défauts de flambage du panneau.

L'exemple de la figure 10 correspond à des essais de cisaillement.

Dans ce cas, les barres latérales sont fixes par rapport aux montants 51, 61, au moins l'un 61 de ceux-ci étant mobile en translation selon son axe A en sorte de pouvoir appliquer des contraintes de cisaillement aux bords latéraux du panneau lorsqu'une traction dissymétrique est appliquée par un vérin 17a sur ce montant.

Dans cette configuration le dispositif comporte en outre des axes 22, 23 autour desquels la poutre fixe 3 et la poutre mobile 9 peuvent pivoter lors de l'application d'une traction sur le montant recevant le vérin 17a.

Un mode de réalisation basé sur l'utilisation de peignes 30 amovibles bloquant les barres 13 pour les essais de cisaillement est représenté à la figure 11.

Le vérin 17a est dans ce cas avantageusement solidaire du ou des peignes bloquant les barres d'un côté du dispositif.

De même, selon le schéma de la figure 10, pour les essais de cisaillement les premiers et troisièmes moyens d'interface comportent au niveau de leur liaison avec respectivement la poutre fixe 3 et la poutre mobile 9 des chemins de roulement 24 dans une direction parallèle à la direction longitudinale desdites poutres de sorte que les moyens d'interface restent parallèles à la direction longitudinale du panneau lors d'une traction dissymétrique appliquée à la poutre mobile du côté opposé à l'axe 22.

Dans ces deux cas et selon le principe de l'invention, au moins certains des moyens d'interface 4, 7, 8, 10 sont configurés pour réaliser des liaisons entre le bâti et le panneau offrant un degré de liberté à ces liaisons entre le bâti et le panneau dans un sens Y transverse au panneau.

Ceci est réalisé par les liaisons des chapes et des barres selon lesquelles les chapes peuvent coulisser sur les barres selon l'axe repéré généralement Y représenté à la figure 6, étant entendu que les axes Y sont des axes locaux au niveau de chaque barre et ne sont pas forcément parallèles entre eux.

En outre, certains au moins des moyens d'interface 4, 7, 8, 10, lorsqu'ils correspondent à l'exemple de la figure 6 et sont dépourvus des moyens d'indexage réalisent des liaisons entre le bâti et le panneau offrant un degré de liberté en rotation Θ à ces liaisons entre le bâti et le panneau autour des axes 15 transverses au panneau que constituent les barres 13.

Les figures 12A à 12F illustrent les possibilités de blocage ou libération des degrés de liberté du panneau en fonction des essais à réaliser.

Les figures 12A et 12B correspondent aux essais en traction ou compression.

La figure 12A représente les déplacement des premiers ou troisièmes moyens interfaces c'est à dire les moyens reliant le panneau à la poutre inférieure 3 ou à la poutre supérieure 9 dans le cas de tels essais.

Dans ce cas, les chapes et les barres sont équipées des moyens d'indexage et une rotation θ des chapes sur les barres est interdite.

De même un mouvement orthoradial selon un axe X (axe courbe selon la largeur du panneau est impossible.

Le coulissement des chapes sur les barres est par contre autorisé (DDL1 libre) et un mouvement radial représenté par les flèches Y est possible.

Le déplacement du panneau 1 est représenté dans le cas d'un essai de compression par rapport à la position initiale en pointillés.

En effet, dans le cas d'une compression longitudinale (appui sur la poutre mobile), le panneau a tendance à s'élargir.

Dans le cas d'un essai en traction, le panneau aurait tendance à se contracter latéralement et se déplacerait de l'autre côté du trait pointillé.

La figure 12B représente les moyens d'interface disposés sur les montants.

Pour ces essais, le déplacement des moyens d'interface latéraux selon l'axe Z vertical est autorisé, le déplacement des chapes sur les barres selon l'axe Y est autorisé et la rotation α des ferrures par rapport aux chapes est autorisée.

Par contre ici aussi les moyens d'indexage sont utilisés et la rotation θ des chapes sur les barres n'est pas possible.

Les figures 12C et 12D représentent les déplacements possibles du panneau dans le cadre d'un essai de cisaillement.

Pour cet essai, au niveau de la poutre mobile représenté à la figure 12C, on retire les moyens d'indexation ce qui libère la rotation θ des chapes sur les barres.

Ici encore les mouvements radiaux selon le l'axe Y (degré de liberté DDL1) sont possibles ainsi que les déplacements des barres dans un sens ortho-radial selon l'axe X par l'utilisation des moyens de roulement 24 de la figure 10.

Pour les moyens d'interface au niveau des montants, comme représenté à la figure 12D, on libère aussi les chapes sur les barres en retirant les moyens d'indexage ce qui permet la rotation θ des chapes sur les barres mais on bloque les articulations entre chapes et ferrures ce qui interdit la rotation α des ferrures par rapport aux chapes.

En outre, on interdit les déplacements libres des barres sur les montants selon l'axe Z et seul un montant entier se déplace selon l'axe A comme déjà décrit à la figure 10.

Les figures 12E et 12F correspondent à des essais de mise en pression du panneau.

Pour ces essais, les moyens d'interfaces avec les poutres haute et basse sont bloqués en rotation θ par utilisation des moyens d'indexage, le déplacement selon l'axe X est bloqué, seul le déplacement selon les axes Y sont possibles.

De même pour les moyens d'interface latéraux schématisés à la figure 12F, on bloque la rotation θ des chapes autour des barres et on libère le déplacement Z des barres parallèlement à elles mêmes.

Ainsi selon l'ensemble des essais, au moins certains des moyens d'interface sont configurés pour réaliser des liaisons entre le bâti et le panneau offrant un degré de liberté à ces liaisons entre le bâti et le panneau dans des directions Y transverses aux bords du panneau.

Dans le cas des essais en traction/compression, les efforts sont transmis à la structure via les interfaces longitudinales au niveau des poutres. Ces interfaces transmettent un flux d'effort maximum de 4000 kN sur une longueur curviligne de 1,2m pour un panneau de 2600 mm de longueur sur 1200 mm de largeur curviligne.

Les conditions limites réalisées par les interfaces sur les bords du panneau permettent de transmettre les forces en jeu tout en guidant la structure le long du rayon de courbure.

Les déplacements en jeu sont de l'ordre de +/- 10mm en axial et +/- 10mm en radial.

Ainsi, selon la présente invention, pour un panneau issu d'une structure de révolution chargée axialement, il s'agit dans un premier temps de ne laisser aux côtés du panneau parallèles à l'axe de révolution que la possibilité de se déplacer radialement.

Par réaction, le système d'interface applique sur ces côtés les contraintes adaptées, sans besoin d'élément mécaniques ou de calculs sophistiqués.

Le déplacement radial est consécutif à la propension du panneau à se rétreindre transversalement sous l'application d'une traction longitudinale et à s'élargir transversalement sous l'action d'une compression longitudinale.

Une des caractéristiques mécaniques importantes d'un panneau de fuselage d'aéronef est sa résistance aux efforts de pression consécutifs à la pressurisation de l'aéronef ce qui correspond aux essais représentés aux figures 12E et 12F.

Pour simuler cette pression on équipe le dispositif d'au moins une vessie 18, 19, en regard d'une face concave du panneau 1.

Cette vessie est disposée en sorte de pouvoir appliquer une pression sur le panneau lorsqu'elle est gonflée.

Selon l'exemple des figures 13A, 13B et 14, on utilise deux vessies, une première vessie représentée à la figure 13A en contact avec le panneau et séparé en plusieurs éléments en fonction du profil interne du panneau qui comporte des raidisseurs réalisés par des lisses dans le sens longitudinal et des cadres dans le sens transversal.
Le spécimen devant pouvoir être sollicité en pression (P de 2000 mb) avec application de la pression du coté où sont implantés les raidisseurs lisses 27 et cadres 28.

Les singularités internes dues à la présence de renforts cadre et lisses sont prises en compte par l'intermédiaire d'une ou plusieurs vessies secondaires 18 très souples qui permettent d'épouser parfaitement la forme des raidisseurs et ainsi de remplir les différentes parties du panneau.

Une seconde vessie 19 ou vessie principale comme représentée en figure 13B et située entre le carcan 25 représenté à la figure 14 et longeant le panneau sur toute sa hauteur la ou les vessies secondaires 18 permet d'appliquer la pression sur la totalité du spécimen.

Les différentes vessies sont gonflée à l'eau pour les essais à température ambiante et à partir d'une huile siliconée pour les essais au-delà de +90°C et la mise en pression est obtenue par l'intermédiaire d'un échangeur eau / air piloté par un dispositif de régulation. Ce principe de gonflage à l'eau permet ainsi de limiter les problèmes de sécurité liés à la pressurisation de l'air et d'améliorer les fréquences en cyclage.

Les vessies 18, 19 envisagées sont par exemple en élastomère Polychloroprène du type SH de 2 mm d'épaisseur - allongement à rupture > 250%.

Selon l'exemple représenté, le dispositif comporte une pluralité de vessies 18 s'insérant entre les lisses et les cadres du panneau et une vessie 19 s'insérant entre ladite pluralité de vessies et un carcan 25.

Lors du gonflage des vessies, le panneau est soumis à une pression sur sa face interne et réagit par déplacement radial des chapes sur les barres ce qui est conforme aux efforts subis par le panneau dans une situation réelle.

De retour à la figure 1, le bâti doit résister aux efforts appliqués et pour ce faire, des raidisseurs 26 sont prévus entre les montants 5, 6.

## Revendications

1. - Dispositif d'essai de panneaux structuraux (1), comprenant des moyens passifs sous forme d'un bâti et de moyens d'interface (4, 7, 8, 10) entre le bâti et le panneau (1) pour appliquer géométriquement au panneau des contraintes représentatives des contraintes dues aux pièces qui entourent le panneau en utilisation normale, **caractérisé en ce que** les moyens passifs comprennent un bâti porteur comportant un socle (2) pourvu d'une poutre fixe (3) recevant une première pluralité de premiers moyens d'interface (4) repris sur un premier bord longitudinal du panneau, au moins deux montants parallèles (5, 6, 50, 60, 51, 61) aux bords latéraux du panneau et recevant une seconde pluralité de seconds moyens d'interface (7, 8) repris sur les bords latéraux du panneau, et **en ce que** le dispositif comprend une poutre mobile (9), recevant une troisième pluralité de troisièmes moyens d'interface (10) repris sur un second bord longitudinal du panneau, la poutre mobile (9) étant solidaire de moyens (17) de traction et d'application de contraintes au panneau, le dispositif d'essai étant configuré pour appliquer des contraintes géométriques sur les bords latéraux du panneau selon le rayon de courbure du panneau en réponse à un effort de traction sur le second bord longitudinal du panneau appliqué avec les moyens (17) de traction et d'application de contraintes au panneau et pour lequel au moins certains des premiers, seconds et troisièmes moyens d'interface (4, 7, 8, 10) comprennent des chapes (12) montées à coulisse sur des barres (13) reprises sur le bâti et/ou la poutre mobile (9).

2. - Dispositif d'essai selon la revendication 1 pour lequel les premiers, seconds et troisièmes moyens d'interface (4, 7, 8, 10) comprennent une pluralité de ferrures (11) assujetties sur le bord du panneau et régulièrement espacées.

3. - Dispositif d'essai selon la revendication 1 ou 2 pour lequel les barres (13) sont orientées parallèlement à des axes (15) transverses au bord du panneau.

4. - Dispositif d'essai selon la revendication 3 pour lequel les axes (15) perpendiculaires au panneau sont des axes radiaux par rapport au panneau.

5. - Dispositif d'essai selon l'une des revendications 1 à 4 pour lequel au moins certaines des chapes (12) et des barres (13) comportent des moyens d'indexage (20, 21) s'opposant à une rotation des chapes (12) sur les barres (13).

6. - Dispositif d'essai selon l'une des revendications 1 à 5 pour lequel les montants parallèles (5, 6, 50, 60) comprennent des glissières porteuses (14), des barres latérales étant solidaires de coulisseaux (16) montés sur les glissières porteuses (14).

7. - Dispositif d'essai selon l'une des revendications 1 à 5 pour lequel des barres latérales sont fixes par rapport aux montants (51, 61), au moins l'un (61) de ceux-ci étant mobile en translation selon son axe (A) en sorte de pouvoir appliquer des contraintes de cisaillement aux bords latéraux du panneau.

8. - Dispositif d'essai selon l'une des revendications précédentes pour lequel au moins certains des moyens d'interface (4, 7, 8, 10) sont configurés pour réaliser des liaisons entre le bâti et le panneau offrant un degré de liberté à ces liaisons entre le bâti et le panneau dans des directions (Y) transverses aux bords du panneau.

9. - Dispositif d'essai selon l'une des revendications précédentes pour lequel au moins certains des moyens d'interface (4, 7, 8, 10) sont configurés pour réaliser des liaisons entre le bâti et le panneau offrant un degré de liberté en rotation (Θ) à ces liaisons entre le bâti et le panneau autour d'axes (15) transverses au panneau.

10. - Dispositif d'essai selon l'une des revendications précédentes **caractérisé en ce qu'**il comporte au moins une vessie (18, 19), en regard d'une face concave du panneau (1) et disposée en sorte de pouvoir appliquer une pression sur le panneau.

11. - Dispositif d'essai selon la revendication 10 **caractérisé en ce qu'**il comporte une pluralité de vessies (18) s'insérant entre les lisses et les cadres du panneau et une vessie (19) s'insérant entre ladite pluralité de vessies et un carcan (25),

12. - Dispositif d'essai selon les revendications 1 et 2 pour lequel les ferrures et les chapes sont reliées par une articulation (29).

## Patentansprüche

1. Prüfvorrichtung für Strukturplatten (1), welche passive Mittel in Form eines Gestells und von Schnittstellenmitteln (4, 7, 8, 10) zwischen dem Gestell und der Platte (1) umfasst, um geometrisch auf die Platte Spannungen auszuüben, die für die Spannungen repräsentativ sind, die auf die Teile zurückzuführen sind, welche die Platte bei normaler Verwendung umgeben, **dadurch gekennzeichnet, dass** die passiven Mittel ein Traggestell umfassen, das ein Unterteil (2) aufweist, das mit einem feststehenden Träger (3) versehen ist, der eine erste Vielzahl von ersten Schnittstellenmitteln (4) aufnimmt, die auf einem ersten Längsrand der Platte abgestützt sind, und wenigstens zwei Pfosten (5, 6, 50, 60, 51, 61), die zu den seitlichen Rändern der Platte parallel sind und eine zweite Vielzahl von zweiten Schnittstellenmitteln (7, 8) aufnehmen, die auf den seitlichen Rändern der Platte abgestützt sind, und dadurch, dass die Vorrichtung einen beweglichen Träger (9) umfasst, der eine dritte Vielzahl von dritten Schnittstellenmitteln (10) aufnimmt, die auf einem zweiten Längsrand der Platte abgestützt sind, wobei der bewegliche Träger (9) mit Mitteln (17) zum Zug und zur Ausübung von Spannungen auf die Platte fest verbunden ist, wobei die Prüfvorrichtung dafür ausgelegt ist, geometrische Spannungen auf die
seitlichen Ränder der Platte gemäß des Krümmungsradius der Platte in Reaktion auf eine auf den zweiten Längsrand der Platte wirkende Zugkraft auszuüben, die mit dem Mitteln (17) zum Zug und zur Ausübung von Spannungen auf die Platte ausgeübt wird, und für welche wenigstens einige der ersten, zweiten und dritten Schnittstellenmittel (4, 7, 8, 10) Abdeckungen (12) umfassen, die verschiebbar auf Stangen (13) angebracht sind, die auf dem Gestell und/oder dem beweglichen Träger (9) abgestützt sind.

2. Prüfvorrichtung nach Anspruch 1, wobei die ersten, zweiten und dritten Schnittstellenmittel (4, 7, 8, 10) mehrere Beschläge (11) umfassen, die am Rand der Platte befestigt und gleichmäßig beabstandet sind.

3. Prüfvorrichtung nach Anspruch 1 oder 2, wobei die Stangen (13) parallel zu Achsen (15) ausgerichtet sind, die quer zum Rand der Platte verlaufen.

4. Prüfvorrichtung nach Anspruch 3, wobei die Achsen (15), die zu der Platte senkrecht sind, radiale Achsen bezüglich der Platte sind.

5. Prüfvorrichtung nach einem der Ansprüche 1 bis 4, wobei wenigstens einige der Abdeckungen (12) und der Stangen (13) Indexiermittel (20, 21) aufweisen, die einer Drehung der Abdeckungen (12) auf den Stangen (13) entgegenwirken.

6. Prüfvorrichtung nach einem der Ansprüche 1 bis 5, wobei die parallelen Pfosten (5, 6, 50, 60) Tragschienen (14) umfassen, wobei seitliche Stangen fest mit Gleitstücken (16) verbunden sind, die auf den Tragschienen (14) angebracht sind.

7. Prüfvorrichtung nach einem der Ansprüche 1 bis 5, wobei die seitlichen Stangen bezüglich der Pfosten (51, 61) feststehend sind, wobei wenigstens einer (61) der Letzteren translationsbeweglich entlang seiner Achse (A) ist, derart, dass Scherspannungen auf die seitlichen Ränder der Platte ausgeübt werden können.

8. Prüfvorrichtung nach einem der vorhergehenden Ansprüche, wobei wenigstens einige der Schnittstellenmittel (4, 7, 8, 10) dafür ausgelegt sind, Verbindungen zwischen dem Gestell und der Platte zu realisieren, welche diesen Verbindungen zwischen dem Gestell und der Platte einen Freiheitsgrad in Richtungen (Y)verleihen, die quer zu den Rändern der Platte verlaufen.

9. Prüfvorrichtung nach einem der vorhergehenden Ansprüche, wobei wenigstens einige der Schnittstellenmittel (4, 7, 8, 10) dafür ausgelegt sind, Verbindungen zwischen dem Gestell und der Platte zu realisieren, welche diesen Verbindungen zwischen dem Gestell und der Platte einen Rotationsfreiheitsgrad (Θ) um Achsen (15) verleihen, die quer zu der Platte verlaufen.

10. Prüfvorrichtung nach einem der vorhergehenden Ansprüche, **dadurch gekennzeichnet, dass** sie wenigstens eine Blase (18, 19) gegenüber einer konkaven Seite der Platte (1) aufweist, die derart angeordnet ist, dass sie einen Druck auf die Platte ausüben kann.

11. Prüfvorrichtung nach Anspruch 10, **dadurch gekennzeichnet, dass** sie mehrere Blasen (18) aufweist, die zwischen die Rippen und die Rahmen der Platte eingefügt werden, und eine Blase (19), die zwischen die mehreren Blasen und ein Joch (25) eingefügt wird.

12. Prüfvorrichtung nach den Ansprüchen 1 und 2, wobei die Beschläge und die Abdeckungen durch ein Gelenk (29) verbunden sind.

## Claims

1. - A testing device for structural panels (1), including passive means in the form of a mount and interface means (4, 7, 8, 10) between the mount and the panel (1) to geometrically apply stresses representing the stresses caused by the parts surrounding the panel during a normal utilisation, **characterised in that** the passive means include a load bearing mount including a base (2) provided with a fixed beam (3) receiving a first plurality of first interface means (4) resting on a first longitudinal edge of the panel, at least two mounts (5, 6, 50, 60, 51, 61) parallel with the lateral edges of the panel and receiving a second plurality of second interface means (7, 8) resting on the side edges of the panel and **in that** the device includes a movable beam (9), receiving a third plurality of third interface means (10) resting on a second longitudinal edge of the panel, the movable beam (9) being integral with means (17) of traction and application of stresses to the panel, the testing device being configured to apply geometrical stresses to the side edges of the panel according to the radius of curvature of the panel in response to a tensile strain on the second longitudinal edge of the panel applied with the means (17) of traction and application of stresses to the panel and for which at least some of the first, second and third interface means (4, 7, 8, 10) include clevises (12) mounted to slide on bars (13) resting on the mount and/or the movable beam (9).

2. - A testing device according to claim 1 for which the first, second and third interface means (4, 7, 8, 10) include a plurality of fittings (11) positioned on the edge of the panel and regularly spaced from each other.

3. - A testing device according to claim 1 or 2 for which the bars (13) are oriented in line with axes (15) transversal to the edge of the panel.

4. - A testing device according to claim 3 for which the axes (15) perpendicular to the panel are radial axes with respect to the panel.

5. - A testing device according to one of claims 1 to 4 for which at least some of the clevises (12) and bars (13) include indexing means (20, 21) opposing a rotation of the clevises (12) on the bars (13).

6. - A testing device according to one of claims 1 to 5 for which the parallel mounts (5, 6, 50, 60) include load bearing slides (14), lateral bars being integral with crossheads (16) mounted on the load bearing slides (14).

7. - A testing device according to one of claims 1 to 5, for which lateral bars are fixed with respect to the mounts (51, 61), at least one (61) of those being movable in translation along its axis (A) so that it can apply shear stresses to the side edges of the panel.

8. - A testing device according to one of the preceding claims, for which at least some of the interface means (4, 7, 8, 10) are configured to provide bonds between the mount and the panel offering a degree of freedom to these bonds between the mount and the panel in directions (Y) transversal to the edges of the panel.

9. - A testing device according to one of the preceding claims, for which at least some of the interface means (4, 7, 8 10) are configured to provide bonds between the mount and the panel offering a degree of freedom in rotation (Θ) to these bonds between the mount and the panel about axes (15) transversal to the panel.

10. - A testing device according to one of the preceding claims, **characterised in that** it includes at least one bladder (18, 19) opposite a concave face of the panel (1) and positioned so as to be able to apply a pressure onto the panel.

11. - A testing device according to claim 10, **characterised in that** it includes a plurality of bladders (18) inserted between the stringers and the frames of the panel and a bladder (19) inserted between said plurality of bladders and a locking plate (25).

12. - A testing device according to claims 1 and 2 for which the fittings and the clevises are linked by a hinge (29).
